# EUROPÄISCHE PATENTSCHRIFT

(11) **EP 1 289 100 B1**
(45) Veröffentlichungstag und Bekanntmachung des Hinweises auf die Patenterteilung: **16.06.2004**
(21) Anmeldenummer: 01120892.3
(22) Anmeldetag: 30.08.2001
(51) Int. Cl.: H02K 15/00

(54) **Elektrische Maschine, insbesondere Starter-Generator**
Electric machine, especially starter-generator
Machine électrique, démarreur-générateur en particulier

(43) Veröffentlichungstag der Anmeldung: 05.03.2003
(73) Patentinhaber: SIEMENS AKTIENGESELLSCHAFT, 80333 München (DE)
(72) Erfinder: Deutloff, Norbert, 97291 Thüngersheim (DE)

(56) Entgegenhaltungen:
- DE-A- 19 905 366
- US-A- 4 458 156
- US-A1- 2001 015 586

## Beschreibung

Die Erfindung bezieht sich auf eine elektrische Maschine, insbesondere einen Starter-Generator, wie in US-A-2001/0 015 586 beschrieben.

Eine derartige elektrische Maschine ist z.B. bei einem Kraftfahrzeug-Antrieb zwischen einer Verbrennungsmaschine und einem Getriebe angeordnet; beim Zusammenbau ist zunächst die elektrische Maschine mit dem Getriebe als Halterungsaufnahme zu verbinden, das an der einen Stirnseite der elektrischen Maschine angeordnet ist, diese mit einer Getriebegehäuseglocke axial und radial übergreift und über einen Statorhalter aufnimmt. Der Statorhalter ist dabei zwischen der getriebegehäuseseitigen einen Stirnseite der elektrischen Maschine und dem Getriebegehäuse angeordnet und an diesem zu befestigen, insbesondere zu verschrauben, wobei diese Befestigungsvorrichtung nur von der anderen Stirnseite der elektrischen Maschine durch axiale erste Befestigungs-Öffnungen des Rotors bzw. eines Rotorhalters der elektrischen Maschine und korrespondierende axiale zweite Befestigungs-Öffnungen in dem Statorhalter zu handhaben ist. Dazu ist eine definierte Drehwinkel-Einstellung des Rotors bzw. des Rotorhalters notwendig, derart dass in dieser Ausricht-Stellung die ersten Befestigungs-Öffnungen zur Handhabung der Befestigungsvorrichtung mit den zweiten Befestigungs-Öffnungen des Statorhalters und der Befestigungsaufnahme des Getriebes als Halterungsaufnahme für die elektrische Maschine fluchten.

Gemäß Aufgabe vorliegender Erfindung soll mit geringem Aufwand bei der Montage zwischen der elektrischen Maschine und der Halterungsaufnahme in Form des Getriebes eine sichere Fixier der ausgerichteten Drehwinkel-Einstellung des Rotors bzw. des Rotorhalters gewährleistet werden können.

Die Lösung dieser Aufgabe gelingt erfindungsgemäß durch eine elektrische Maschine gemäß Patentanspruch 1; vorteilhafte Ausgestaltungen der Erfindung sind jeweils Gegenstand der Unteransprüche.

Durch die erfindungsgemäße, mit einfachen Mitteln erreichbare, Ergänzung der an sich zum Schutz während des Transports zum Getriebeanbau und bei der eigentlichen Zusammenbau-Montage notwendigen Wickelkopf-Schutzabdeckung kann in einem Arbeitsgang gleichzeitig mit der Anbringung der Wickelkopf-Schutzabdeckung eine sichere Fixier der zuvor eingestellten ausrichtenden Drehwinkel-Einstellung des Rotors fixiert und die gegenseitige Befestigung durch die fluchtenden ersten bzw. zweiten Befestigungs-Öffnungen von Rotor bzw. Rotorhalter bzw. Statorhalter gehandhabt werden; anschließend ist die dann nicht mehr notwendige Wickelkopf-Schutzabdeckung entfernbar und die Verbrennungsmaschine zur Komplettierung des Aggregats anbaubar.

Die Erfindung sowie weitere vorteilhafte Ausgestaltungen gemäß Merkmalen der Unteransprüche werden im folgenden anhand einer schematischen Zeichnung näher erläutert.

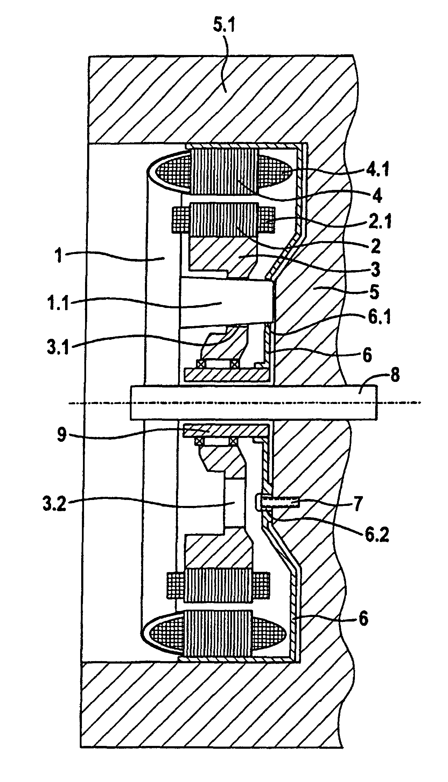

Die Figur zeigt in einem Axialschnitt einen in einer Getriebegehäuseglocke 5.1 eines an der einen Stirnseite als Halterungsaufnahme 5 angeordnetes Getriebes über einen Statorhalter 6 gehalterten Starter-Generator mit einem Rotor 2;2.1;3 mit einem von einem Rotorhalter 2 aufgenommenen, mit einer Rotorwicklung 2.1 versehenen Rotor-Blechpaket 2 und mit einem Stator mit einem mit einer Statorwicklung 4.1 versehenen Statorpaket 4. Der Rotorhalter 3 ist auf einer Lagerhülse 9 drehbar gelagert, welche eine Getriebewelle 8 des Getriebes umgibt und die - in hier nicht näher dargestellter, jedoch an sich bekannter Art - gegebenenfalls über eine Kupplung mit der Kurbelwelle eines an der anderen Stirnseite des Starter-Generators anordbaren Verbrennungsmaschine koppelbar ist.

Während des Zusammenbaus von Starter-Generator einerseits und Getriebe andererseits ist in vorteilhafter Weise die Statorwicklung 4.1, zumindest im Bereich ihrer ansonsten bis zur Endmontage offen liegenden Wickelköpfe, durch eine an dem Stator-Blechpaket 4 anklemmbare Wickelkopf-Schutzabdeckung 1 schützbar.

Erfindungsgemäß ist die Wickelkopf-Schutzabdeckung 1 über ihren Umfang verteilt mit - vorzugsweise einstückig angeformten - Fixiermitteln 1.1, insbesondere in Form von im wesentlichen axial vorstehenden Fixierbolzen, versehen, die in Fixier-Aufnahmen 3.1 des Rotorhalters 3 derart eingreifen, dass der Rotor in einer Drehwinkel-Einstellung fixierbar ist; in dieser Einstellung fluchten Befestigungs-Öffnungen 3.2 in dem Rotorhalter 3 mit Befestigungs-Öffnungen 6.2 in dem Statorhalter 6 derart korrespondierend, dass eine Befestigungsvorrichtung 7, insbesondere in Form von Schrauben, von der linken Stirnseite des Starter-Generators unbehindert im Sinne einer Fixierung des Statorhalters 6 und damit des Starter-Generators an der Halterungsaufnahme 5 in Form des Getriebes handhabbar ist.

Diese Fixierung kann dadurch noch verbessert werden ,dass die Wickelkopf-Schutzabdeckung 1 nicht nur im Klemmsitz an dem Stator-Blechpaket 4 gehalten ist, sondern im Sinne einer zusätzlichen Verdrehsicherung des Rotorhalters 3 durch dessen Fixier-Aufnahmen 3.1 hindurch rückseitig in korrespondierende angepasste Fixier-Aufnahmen 6.1 des Statorhalters 6 einsteckbar ist.

Die Wickelkopf-Schutzabdeckung kann als Wicklungsschutz während eines Transports des Starter-Generators zum Montageort für den Zusammenbau mit dem Getriebe und bei dem eigentlichen Zusammenbau-Montagevorgang dienen; nach dem festen Verbund, insbesondere in Form einer Verschraubung, zwischen dem Statorhalter 6 mit dem von diesem aufgenommenen Starter-Generator einerseits und dessen Halterungsaufnahme 5 in Form eines Getriebes andererseits ist die Wickelkopf-Schutzabdeckung frei abziehbar, wobei die Fixier-Mittel 1.1 aus den Fixier-Aufnahmen 3.1 in dem Rotorhalter 3 als auch den Fixier-Aufnahmen 6.1 des Statorhalters 6 ausziehbar sind.

Im Anschluss daran folgt die, hier nicht zu erläuternde, Anbaumontage der Verbrennungsmaschine an die getriebeabgewandte andere Stirnseite des Starter-Generators.

Die zuvor erläuterte Erfindung kann wie folgt zusammengefasst werden:

Zur einfachen, jedoch gleichzeitig genauen Zusammenbau-Montage einer elektrischen Maschine, insbesondere eines Starter-Generators in einem Kraftfahrzeug, mit einer Halterungsaufnahme 5 in Form eines Gehäuses eines Getriebes ist ein dabei zur gegenseitigen axialen Ausrichtung von Befestigungs-Öffnungen 3.2;6.2 notwendige Drehwinkel-Einstellung des Rotors 2;2.1;3 der elektrischen Maschine dadurch vorfixierbar, dass eine während des Transports bzw. der Montage am Stator 4;4.1 der elektrischen Maschine angeordnete Wickelkopf-Schutzabdeckung 1 zusätzlich mit Fixiermitteln 1.1, insbesondere in Form von Fixierbolzen, versehen ist, die in korrespondierende Fixier-Aufnahmen 3.1;6.1 des Rotors bzw. eines Statorhalters 6 für die elektrische Maschine einsteckbar sind.

## Patentansprüche

1. Elektrische Maschine, insbesondere Starter-Generator,
- mit einem Stator (4;4.1) und einem Rotor (2;2.1;3);
- mit einem der einen Stirnseite der elektrischen Maschine axial vorgelagerten Statorhalter (6);
- mit einer axial von der anderen Stirnseite der elektrischen Maschine durch Befestigungs-Öffnungen (3.2) des Rotors bedienbarer Befestigungsvorrichtung (7) zur Befestigung des Statorhalters (6) an einer Halterungsaufnahme (5) für die elektrische Maschine;
- mit einer an dem Stator an dessen anderer Stirnseite anordbaren Wickelkopf-Schutzabdeckung (1);
- mit Fixiermitteln (1.1) an der Wickelkopf-Schutzabdeckung (1) zur Fixierung des Rotors in einer definierten Drehwinkel-Einstellung, insbesondere im Sinne einer axialen Ausrichtung der Befestigungs-Öffnungen (3.2) des Rotors zu den Befestigungs-Öffnungen (6.2) des Statorhalters (6).

2. Elektrische Maschine nach Anspruch 1
- mit einer Anwendung der Wickelkopf-Schutzabdeckung (1) als Transportsicherung vor bzw. während der gegenseitigen Montage der elektrischen Maschine einerseits und Statorhalter (6) bzw. der Halterungsaufnahme (5) andererseits.

3. Elektrische Maschine nach Anspruch 1 und/oder 2
- mit einer einstückigen Anformung der Fixiermittel (1.1) an die Wickelkopf-Schutzabdeckung (1).

4. Elektrische Maschine nach zumindest einem der Ansprüche 1 bis 3
- mit einer Ausbildung der Wickelkopf-Schutzabdeckung (1) aus einem Kunststoff-Material.

5. Elektrische Maschine nach zumindest einem der Ansprüche 1 bis 4
- mit einer formschlüssigen Steckfixierung der Fixiermittel (1.1) in korrespondierende Fixier-Aufnahmen (3.1) des Rotors (2;2.1;3).

6. Elektrische Maschine nach zumindest einem der Ansprüche 1 bis 5
mit einer formschlüssigen Steckfixierung der Fixiermittel (1.1) in korrespondierenden Fixier-Aufnahmen (6.1) des Statorhalters (6).

7. Elektrische Maschine nach zumindest einem der Ansprüche 1 bis 6
- mit einer Anordnung der Befestigungsvorrichtung (7), der Befestigungs-Öffnungen (3.2), der Fixiermittel-Aufnahmen (3.1) des Rotors (2;2.1;3) und der Fixiermittel (1.1) der Wickelkopf-Schutzabdeckung (1) radial innerhalb der statoraußenumfangsseitigen eigentlichen Wickelkopf-Schutzabdeckung (1).

8. Elektrische Maschine nach zumindest einem der Ansprüche 1 bis 7
- mit einer Halterungsaufnahme (5) in Form eines an die eine Stirnseite der elektrischen Maschine angebauten Getriebes.

9. Elektrische Maschine nach zumindest einem der Ansprüche 1 bis 6
- mit einer Ausbildung der Befestigungsvorrichtung (7) in Form von Schrauben, mit denen durch die Befestigungs-Öffnungen (3.2) des Rotors (2;2.1;3) sowie durch Befestigungs-Öffnungen (6.2) des Statorhalters (6) dieser an der Halterungsaufnahme (5) festlegbar, insbesondere festschraubbar, ist.

10. Elektrische Maschine nach zumindest einem der Ansprüche 1 bis 9
- mit einer Verwendung der elektrischen Maschine als Starter-Generator, insbesondere in einem Kraftfahrzeug;
- mit einer Ankopplung einer Verbrennungsmaschine an die elektrische Maschine im Bereich vor deren anderer Stirnseite bei nach dem Zusammenbau von Statorhalter und Getriebe entfernter Wickelkopf-Schutzabdeckung.

## Claims

1. An electric machine, in particular a starter-generator,
- having a stator (4;4.1) and a rotor (2;2.1;3);
- having a stator holder (6) mounted axially ahead of the one end face of the electric machine;
- having a securing device (7) for fixing the stator holder (6) to a retaining receptacle (5) for the electrical machine, said securing device being accessible axially from the other end face of the electric machine through securing openings (3.2) of the rotor;
- having an end winding protective cover (1) which can be disposed on the stator at its other end face;
- having fixing means (1.1) on the end winding protective cover (1) for fixing the rotor in a defined angle of rotation setting, in particular for the purpose of an axial alignment of the securing openings (3.2) of the rotor with the securing openings (6.2) of the stator holder (6).

2. The electric machine according to Claim 1,
- having an application of the end winding protective cover (1) as transport protection before and/or during the reciprocal assembly of the electric machine on the one hand and stator holder (6) or retaining receptacle (5) on the other hand.

3. The electric machine according to Claim 1 and/or 2,
- having a single-piece forming of the fixing means (1.1) to fit the end winding protective cover (1).

4. The electric machine according to at least one of the Claims 1 to 3,
- having an embodiment of the end winding protective cover (1) made of a plastic material.

5. The electric machine according to at least one of the Claims 1 to 4,
- having a positive plug-in fixing of the fixing means (1.1) into corresponding fixing receptacles (3.1) of the rotor (2;2.1;3).

6. The electric machine according to at least one of the Claims 1 to 5,
- having a positive plug-in fixing of the fixing means (1.1) in corresponding fixing receptacles (6.1) of the stator holder (6).

7. The electric machine according to at least one of the Claims 1 to 6,
- having an arrangement of the securing device (7), the securing openings (3.2), the fixing means receptacles (3.1) of the rotor (2;2.1;3) and the fixing means (1.1) of the end winding protective cover (1) radially within the actual end winding protective cover (1) on the side of the outer circumference of the stator.

8. The electric machine according to at least one of the Claims 1 to 7,
- having a retaining receptacle (5) in the form of a gearbox mounted onto the one end face of the electric machine.

9. The electric machine according to at least one of the Claims 1 to 7,
- having an embodiment of the securing device (7) in the form of screws by means of which this can be secured, in particular screwed, to the retaining receptacle (5) through the securing openings (3.2) of the rotor (2;2.1;3) as well as through securing openings (6.2) of the stator holder 6).

10. The electric machine according to at least one of the Claims 1 to 9,
- having a use of the electric machine as a starter-generator, in particular in a motor vehicle;
- having a coupling of a combustion engine to the electric machine in the area ahead of the latter's other end face with the end winding protective cover removed after the assembly of stator holder and gearbox.

## Revendications

1. Machine électrique, en particulier démarreur-générateur,
- comportant un stator (4; 4.1) et un rotor (2; 2.1; 3),
- comportant un support de stator (6), préalablement monté axialement sur l'une des faces frontales de la machine électrique,
- comportant un dispositif de fixation (7) pouvant être desservi axialement, au travers d'ouvertures de fixations (3.2), depuis l'autre face frontale de la machine électrique, pour fixer le support de stator (6) sur un réceptacle de fixation (5) pour la machine électrique,
- comportant un recouvrement de protection (1) de tête de bobine, adaptable au stator, sur son autre face frontale,
- comportant des moyens de fixation (1.1) sur le recouvrement de protection (1) de tête de bobine pour la fixation du rotor dans une position de réglage définie de l'angle de rotation, en particulier en vue d'aligner axialement les ouvertures de fixation (3.2) du rotor avec les ouvertures de fixation (6.2) du support de stator (6).

2. Machine électrique suivant la revendication 1,
- comportant une utilisation du recouvrement de protection (1) de la tête de bobine comme sécurité de transport respectivement avant et pendant le montage de la machine à combustion interne, d'une part, et du réceptacle de fixation (5), d'autre part.

3. Machine électrique suivant la revendication 1 et/ou 2,
- comportant un formage, en une seule pièce, des moyens de fixation (1.1) contre le recouvrement de protection (1) de tête de bobine.

4. Machine électrique suivant au moins l'une des revendications 1 à 3,
- comportant une réalisation du recouvrement de protection (1) de la tête de bobine à partir d'un matériau en matière plastique.

5. Machine électrique suivant au moins l'une des revendications 1 à 4,
- comportant une fixation par enfichage, par conjugaison de formes, des moyens de fixation (1.1) dans des réceptacles de fixation correspondants (3.1) du rotor (2; 2.1; 3).

6. Machine électrique suivant au moins l'une des revendications 1 à 5,
- comportant une fixation par enfichage, par conjugaison de formes, des moyens de fixation (1.1) dans des réceptacles de fixation correspondants (6.1) du support de stator (6).

7. Machine électrique suivant au moins l'une des revendications 1 à 6,
- comportant une disposition du dispositif de fixation (7), des ouvertures de fixation (3.2), des réceptacles de fixation (3.1) du rotor (2; 2.1; 3) et des moyens de fixation (1.1) du recouvrement de protection (1) de la tête de bobine, radialement à l'intérieur du recouvrement de protection (1) de la tête de bobine proprement dit, sur le côté de l'enveloppe extérieure du stator.

8. Machine électrique suivant au moins l'une des revendications 1 à 7,
- comportant un réceptacle de fixation (5) sous la forme d'une boîte de vitesse montée contre l'une des faces frontales de la machine électrique.

9. Machine électrique suivant au moins l'une des revendications 1 à 8,
- comportant la réalisation du dispositif de fixation (7) sous la forme de vis, avec lesquelles on peut, au travers des ouvertures de fixation (3.2) du rotor (2; 2.1; 3), ainsi qu'au travers des ouvertures de fixation (6.2) dans le support de stator (6), le fixer, en particulier le fixer par vis, au réceptacle de fixation (5).

10. Machine électrique suivant au moins l'une des revendications 1 à 9,
- cette machine électrique étant utilisée comme démarreur-générateur, en particulier dans un véhicule automobile,
- une machine à combustion interne étant accouplée à la machine électrique dans la zone située en amont de son autre face frontale lorsque, après l'assemblage du support de stator et de la boîte de vitesse, le recouvrement de protection de la tête de bobine a été enlevé.
